# EUROPEAN PATENT APPLICATION

(11) **EP 3 633 588 A1**
(43) Date of publication of application: **08.04.2020**
(21) Application number: 18198950.0
(22) Date of filing: 05.10.2018
(51) Int. Cl.: G06Q 50/00, G06Q 30/02

(54) **A SYSTEM COMPRISING A SPORTS FLOOR AND AN LBSN**

(71) Applicant: Melos GmbH, 49324 Melle (DE)
(72) Inventor: SICK, Stephan, 47877 Willich-Neersen (DE); SIEKMANN, Jörg, 33332 Gütersloh (DE)
(74) Representative: Richardt Patentanwälte PartG mbB

(57) **Abstract**

A system (200, 300, 400, 500) is provided comprising a sports floor (260) and a client application (222). The sports floor comprises sensors (234, 602) adapted to receive (902) identification data of a first user (120). The client application is configured to receive (904) the identification data (230) of a first user when the first user interacts with the sports floor and to send the identification data and location data of the sports floor to the LBSN to enable the LBSN to notify one or more other users of the first user having interacted with the sports floor.

## Description

### Field of the invention

The invention relates to sports floors and, more specifically, to sports floors comprising sensors.

### Background and related art

A growing number of sports fields are equipped with various electronic devices and sensors. Some larger stadiums have been constructed as so-called "smart stadiums" whose electronic components are connected to each other and/or to internet-based services (i.e., the Internet of Things) that can, for example, improve the fan experience or ease the process of buying food or drinks. Some floor types contain sensors but have no internet connection. For example, the European patent application EP 1 732 048 A2 describes a playground that includes a flooring system of multiple layers, with three presence sensors inserted between a concrete covering and the floor. The sensors are connected by cables, with a processing system for controlling the display of a light signal and/or the diffusion of a warning message by warning units. However, the vast majority of existing sports fields, in particular small sports fields owned by communities, cities, and sports clubs, are still not integrated into the "virtual world." Often, an integration is considered difficult or impossible for technical and cost-related reasons.

### Invention summary

The invention provides for a system comprising a sports floor integrated with a location-based social network and for a corresponding computer-implemented method, as specified in the independent claims. Embodiments of the invention are given in the dependent claims. Embodiments and examples described herein can freely be combined with each other as long as they are not mutually exclusive.

In one aspect, the invention relates to a system comprising a sports floor and a client application.

The sports floor comprises one or more sensors. Each sensor is adapted to receive identification data of a first user interacting with the sports floor.

The client application is interoperable with a location-based social network (LBSN). The LBSN comprises a user registry and a places registry. The user registry comprises a plurality of user accounts of registered users. Some of the user accounts are interlinked. A link between two user accounts represents a trusted relationship between the two interlinked user accounts. The places registry comprises a plurality of places. Each place is a digital representation of a physical place at a known location. One of the places represents the sports floor. The client application is configured to receive the identification data of a first user from the one or more sensors upon the first user interacting with the sports floor. Then the client application automatically sends a first message comprising the identification data and location data of the sports floor to the LBSN. The first message enables the LBSN to notify one or more second users whose accounts are linked to the account of the first user that the first user has interacted with the sports floor.

For example, a user may interact with a sports floor by entering, walking on, running on, jumping on, or otherwise moving relative to the sports floor.

These features may be advantageous because the sports floor is integrated, via the sensors and the client application, to an LBSN and hence to the "virtual world," where a growing number of people, in particular younger people, spend their work and leisure time. The integration of a sports floor into the LBSN may increase the attractiveness of a sporting facility offering the sports floor and may increase the number of people who visit and use the sports floor. This is because sports are typically social activities whose attractiveness is based not only on the physical exercise itself but also on the social experience shared with others. As the LBSN is configured to automatically notify other users who are linked to the user who enters and interacts with the sports floor, the other users have the option to spontaneously join the first user. As a result, the spontaneous gathering of many people who already know each other in order to build sports teams (e.g., soccer teams, baseball teams) or to perform activities together (e.g., yoga, weightlifting) is facilitated. The first user who initially interacts with the sports floor, for example, by entering or running across the sports floor, does not have to actively invite his or her friends. In other words, it is not necessary to make a phone call, to send a chat message, or to SMS in order to notify friends of the current position of the first user. A phone call, email, or other form of explicit invitation is not only time-consuming, it may often be considered too intrusive, in particular at times of day when many people typically work, eat, or sleep. As the notification is sent automatically by the LBSN to all users who are linked to the first user, the first user saves time and effort because no explicit invitation message has to be specified. In addition, as the message is created automatically by the LBSN, the second users who receive the first message will receive the message via a communication channel (of the LBSN) that is typically configured such that it doesn't interfere in an undesired way with activities of the second users.

In a further beneficial aspect, the identification data of the first user is initially received by sensors of the sports floor, not by sensors contained in the smartphone of the first user. Typically, a user has to authenticate at a smartphone by entering a PIN before he or she can use apps and other functionalities installed on the smartphone. Hence, in principle, smartphones can be used for identifying a particular user at a particular place, e.g., by determining the smartphone's current GPS position while a user enters the PIN. However, in many cases, the GPS functionality of smartphones is not suited for integrating a sports floor with a software application, e.g., a social network.

Firstly, many sports floors are indoor sports floors and are located within buildings where the GPS connection is unstable or plainly absent. In some cases, the GPS position of players located on a sports ground cannot be determined because the GPS signal is shielded by large buildings, rocks, or other objects. Second, even if a GPS position is available, the resolution of the GPS signal may not be sufficient to reliably distinguish between multiple adjacent small sports fields, e.g., small playgrounds for children. To the contrary, according to embodiments of the invention, the first user who interacts with the sports field is identified by sensors that are part of a particular sports floor and hence implicitly know the type of sports field (and its location) that the first user has interacted with.

A "sports floor" as used herein is a floor that is specifically designed for a particular sports activity or gaming activity. Typically, a sports floor is made of elastic materials that absorb shock and decrease impact levels. Examples of sports floors are elastic polyurethane layers, which may comprise rubber granulate or other forms of elastic granulate. According to other examples, the sports floor is an artificial or hybrid turf, or an interactive surface as described, for example, in WO 2006/103676 A2.

A "client application" as used herein is a piece of software, e.g., an application program or "app" that is interoperable with an LBSN.

According to embodiments of the invention, the LBSN is implemented as client-server architecture, and the client application represents the client part, while the LBSN itself represents the server part. In this case, the client part and the server part of the LBSN are provided by the same organization. According to other embodiments, the client application is provided by an organization other than the LBSN. For example, the client application can be a software application developed specifically for a particular type of sport (e.g., soccer), for a particular type of game (e.g., a role-playing game), for a particular type of activity (e.g., for monitoring fitness indicators, such as heart rate, of an individual person), or for a particular type of sports floor, sports floor manufacturer (e.g., artificial turf), or particular company maintaining and providing sports fields and other sporting facilities. The LBSN can be a general-purpose LBSN that is not limited to linking people to particular sports fields, but the driver can also be used for linking people with other places, such as restaurants, schools, cinemas, or the like. Alternatively, the LBSN can be a specific sports-related LBSN that is configured to link people to sports fields or sporting facilities of a particular type, such as those provided by a particular organization or manufacturer.

A "sensor" as used herein is an electronic device that is adapted to capture data of a user.

In some examples, the sensor is configured to capture data of a user, whereby the data is identification data, i.e., data that allows for the identification of the user. This type of sensor preferably comprises a data-capturing unit and further comprises, or is operatively coupled to, an identification unit that processes the data captured by the capturing unit for identifying the person. The identification unit can be part of the sensor but can also be part of the client application or the LBSN. For example, the sensor can be a camera that is operatively coupled to an image analysis module and to a database comprising biometrical image data of a plurality of registered users. For example, the biometrical image data can be individual image profiles computed from face images, iris images, whole-body images, or the like. The sensor can also be a fingerprint sensor, a microphone coupled to a voice-recognition module, one or more optical or mechanical sensors adapted to compute movement profiles from the movement data obtained from a particular person, or the like.

In some embodiments, the identification data that is captured by the sensors is processed and transformed by the sensors or by the client application into other identification data of the same user that can be interpreted by the LBSN. For example, one or more sensors may capture biometric data (e.g., a fingerprint, a face image, a movement profile) of a particular person who has entered the sports field and compare the biometric data of this person with biometric data of a plurality of persons who have registered at the organization that offers the sports floor. For example, this organization could be a fitness club or the operator of the building containing the sports floor, whereby this organization may have nothing to do with the LBSN. The comparison of the biometric data of the first user with the biometric data of a plurality of users having registered for the particular sports floor may reveal other personal data of the first user, e.g., name, address, and birthdate of the user. The other personal data of the person having entered the sports floor may also include the LBSN-username of this person. Then, the other identification data (here: name, address, and optional username instead of the biometric data) is sent from the sensors to the client application. If the mapping/transformation of the biometric data to the other identification data is performed by the client application, the client application sends the other identification data to the LBSN.

The expression "identification data" as used herein is data that allows the identification of the user. For example, identification data can be biometric data of the user that, if evaluated against the biometric data of a plurality of users whose identity is known, allows identification of one of the known users from whom the biometric data is derived. According to other examples, the identification data specifies the name, address, and further user-related attributes, such as the date and place of birth, that allow the identification of a particular person.

A "location-based social network (LBSN)" as used herein is a social network that is configured to broadcast the current location of registered users and other content related to said users to other registered users. The LBSN can be configured to notify other users, e.g., the LBSN friends, of a current place and hence also a current activity of a particular user who is a member of and has registered at the LBSN. An LBSN allows registered users to share location-embedded information and also provides a new social structure in which individuals are not only connected to each other but are also connected to locations and to other users via shared locations. Here, the physical location consists of or includes the sports floor used by a particular user at a given time.

A "location" can be represented in absolute (latitude-longitude coordinates, GPS coordinates), relative (100 meters north of a reference point, e.g., particular coordinates or a particular building), and symbolic (home, office, or shopping mall) forms.

A "path" as used herein is a trajectory connecting multiple different locations crossed by a user in a particular time interval.

A "registry" as used herein is a data structure, e.g., a file, a database table, a directory, or the like, stored on a nonvolatile storage device that comprises a set of data records. For example, a user registry can comprise data records respectively representing user accounts of registered users. A places registry can comprise data records respectively representing physical places, e.g., sports floors. The LBSN may enable the registered users to explicitly create links to other users considered to be trusted users (LBSN friends) and may automatically create additional, dynamic links between different users who have visited the same sports floor during a predefined time interval, e.g., an hour, a day, or a week.

A "terminal" as used herein is a hardware device that comprises a CPU, a keyboard, and a monitor and that enables a user to enter data that is communicated to the internal CPU of the terminal or to another network device or computer. For example, the terminal can be an immobile terminal installed at the entrance of a sporting facility.

A "message" is a data structure used for transporting data from a data source to a target. A message can have any format, e.g., an XML file, an email, a SOAP ("Simple Object Access Protocol") message, an application-specific or LBSN-specific format, or the like.

According to embodiments, the system comprises a plurality of further sports floors. Each further sports floor comprises one or more further sensors. Each further sensor is adapted to receive identification data of the first user upon the user's entering or walking on the further sports floor. At least some of the further sports floors are located within a 500-meter radius from the center of the sports floor.

According to embodiments, the sports floor is an indoor sports floor.

According to embodiments, the sports floor and the further sports floors are located within the same building. The building may not allow GPS signals to enter or leave the building.

According to embodiments, the client application is installed on a mobile telecommunications device assigned to the first user.

Said features may be advantageous because the implementation of the client application in the form of an app that is installed on a user's smartphone may enable the user to configure the behavior of the client application easily. For example, the user may use the client application to register at both the LBSN and the sports floor. The client application may be configured to translate the identification data of the user captured by the sensors into a transformed version of the identification data of the user that is interpretable by the LBSN, e.g., a particular username and password.

According to some embodiments, the client application installed on the smartphone is configured to receive a place identifier and/or location information from a terminal or other electronic device that is installed in spatial proximity to the sports field and to send this place identifier and/or the location information received from the terminal to the LBSN instead of GPS data that may be provided by a smartphone-internal GPS sensor.

According to other embodiments, the client application is installed on a terminal positioned in the proximal vicinity of the sports floor.

This may be beneficial, as there is no need for the user to carry a smartphone in order to notify the LBSN of his or her arrival at the sports floor. This is particularly advantageous for sports floors in buildings where no telecommunications connection to the internet and the LBSN is possible.

Furthermore, in some sports, such as gymnastics or ballet, carrying a smartphone is so impractical that smartphones are usually left behind in the changing rooms. In this case, each user has to register once as a new user of the sports floor at the terminal by providing his or her identification data (e.g., biometric data and/or name and address) to the terminal. This identification data may also be referred to as "first identification data." In addition, he or she has to provide access data to the LBSN such that the client application is enabled to send, upon receiving first identification data of a registered user from sensors of the sports field, second identification data to the LBSN that enables the LBSN to identify one of the user accounts that represents this particular user.

According to embodiments, the client application (which may be installed on a terminal or on a user's smartphone) is configured to receive a second message from the LBSN in response to the first message and to cause a display to change its content, depending on the content in the second message.

The display can be, for example, the display of the first user's smartphone (where the client application may be installed). Alternatively, the display can be the display of a terminal at the entrance of the sports floor (where the client application may be installed). According to still other embodiments, the display is an interactive display that is integrated into or attached to the sports floor.

According to embodiments, each sensor is selected from a group comprising a sensor of biometric data and a near-field communication (NFC) interface adapted to receive a user ID of the first user provided by an app that is interoperable with the LBSN.

For example, the sensor for biometric data can be a camera. The camera can be used for capturing images of faces or of irises. The sensor of biometric data can also be a fingerprint sensor, a microphone adapted to capture voice profiles, a camera or a sensor pad adapted to capture motion profiles of a user moving across the sports floor, and the like. According to some embodiments, already the sensor comprises a complex program logic that is configured to extract user-specific patterns or profiles (a development of one or more measured parameter values or derivatives thereof over time) from the physical parameters measured ("sensed") by the sensor. For example, the input parameters can be a pixel based intensity matrix in the case of an optical sensor (camera) and the pattern that is extracted by the program logic from the images can be a fingerprint, Iris pattern, face profile or the like. In case one or more sensors in addition sense/detect the position and time when a particular physical parameter was measured, the program logic of the sensor can use this data for computing movement patterns that are characteristic for each individual user. In some embodiments, the complex program logic adapted to extract the patterns and profiles is not an integral part of the sensor(s) but is rather part of a separate data processing device, e.g. a local or remote computer and is configured to receive the sensed data from the sensors and to return the computed patterns and profiles to the sensor and/or display devices of the sports field where the sensors are installed.

The sensor can be, for example, a radio frequency (RF) sensor, an accelerometer, a magnetic, acoustic or optical sensor. The sensor can deduce the path of movement of a user moving over the sports floor.

The near-field communication (NFC) interface can be a Bluetooth or Wi-Fi device that is interoperable with the client application and is able to receive an electronic identifier of a user when a user starts interacting with the sports floor.

According to embodiments, the system comprises one or more sensors referred to as "location sensors" that are adapted to track the first user and any other identified person while moving across the sports floor and that are adapted to automatically send current location data of the first user and the other identified persons, if any, to the client application. In some embodiments, the location sensors are also used for capturing the identification data.

According to embodiments, the interaction of the first user with the sports floor is selected from a group comprising the following: entering the sports floor, moving (walking, running, etc.) across the sports floor, applying pressure to the sports floor, and swiping or otherwise touching the sports floor with a hand or a sporting device.

According to embodiments, the interactive display is configured to generate a graphical user interface (GUI) with a menu, enabling the first user to select one of a plurality of interactive games, wherein the objects displayed to the first user depend on the game that was selected.

This may be beneficial because the sports floor becomes more versatile and may attract more users of different age groups and interests. For example, the menu may enable a user to specify that the interactive display of the sports floor display the typical lines of a soccer field. Other options provided by the menu could be the display of a virtual sports floor comprising the typical lines of a baseball field, a virtual floor comprising virtual areas for yoga mats, a virtual floor for a kids' game, a virtual floor for an edutainment game, etc.

According to embodiments, the sports floor comprises an interactive display.

For example, the interactive display can be a touch screen. A touch screen enables a user to interact directly with the content displayed on the screen. A further advantage is that highly robust touch screen versions are available. According to other embodiments, the interactive display comprises an elastic layer used as the sports floor and a projector configured to project the virtual (sports, game, or edutainment) environment onto the elastic layer. The interactive display further comprises sensors, e.g., pressure sensors below or within the elastic layer or optical sensors adapted to capture images of objects touching the upper surface of the elastic layer. The sensors are used for detecting when and where a user or a sports object, e.g., a ball, touches the sports floor with the interactive display, and for sending the detected time and location of the "touch event" to the software that generates the virtual environment, e.g., the client application. The software that generates the virtual environment is configured to modify the displayed environment in response to a touch or movement event.

For example, the menu may enable a user to specify that the interactive display of the sports floor display the typical lines of a soccer field. When the soccer game is over and the players leave the floor, one or more other users who want to practice yoga rather than play soccer may enter the field. In this case, the interactive display may highlight areas that are individually assigned to the other users as virtual yoga mats. However, it is also possible that the other users are children intending to play, for example, jumping games. In this case, the menu may enable the kids to cause the interactive display to show highlighted squares to be used as the basis for the jumping game. The use of an interactive display with a menu that allows a user to dynamically and spontaneously select a particular virtual gaming or sports environment to be displayed on the sports field may be particularly advantageous in combination with the LBSN as a user may spontaneously show up at a particular sporting facility, may spontaneously select a particular type of sport or game whose virtual environment is to be displayed on the sports floor, and may automatically, without any explicit action, invite friends to join him or her at the sports field.

According to embodiments, the client application is adapted to cause the interactive display to show one or more user-related objects. The position of the one or more user-related objects relative to the first user remains constant while the user moves across the sports floor.

In addition, or alternatively, the client application is adapted to cause the interactive display to show one or more avatar-objects on the interactive display. Each avatar object is a graphical representation of a remote human user currently interacting with a remote sports floor. The position of the avatar object on the interactive display of the sport floor is dynamically determined by performing a real-time mapping of the position of the remote user on the remote sports floor to a respective position on the interactive display of the sport floor where the avatar-object representing said remote user is to be displayed.

For example, a distributed system of multiple sports floors can be provided, whereby each sports floor respectively comprises one or more interactive displays, e.g. interactive displays forming or being part of the sports floor, one or more sensors and a program logic that is operatively coupled to the LBSN. The LBSN allows multiple LBSN-registered users currently interacting with different ones of the plurality of sports floors to play a game together even though they are currently not on the same sports floor. This is achieved by the LBSN or a sub-logic thereof that is configured to determine a sub-set of LBSN-registered users who currently want to play a team-game or another game involving multiple users with each other, whereby one or more first users of the sub-set is currently located at a sports floor "A" while one or more second users of the sub-set is currently located at a sports floor "B". It is also possible that one or more third users of the sub-set are currently located at a sports floor "C". The LBSN comprises and maintains a virtual mapping of the x and y coordinates of the sports floors A, B and C, if any. Preferably, but not necessarily, the sports floors A, B and C have identical or similar dimensions to ensure that the distances a user is able to cover per time is basically the same for all sports floors whose dimensions are mapped to each other in support of a distributed, virtually unified sports floor. The LBSN uses the mapping to dynamically and in real-time "simulate" the presence of all "absent users" of the sub-set of users taking part in the game on the interactive display of the respective sports floor. For example, the first users are physically present on sports floor A and are graphically represented via respective avatar-objects on sports floor B (and C, if any). There is no need to generate and display avatar objects for the first users on the interactive display of sports floor A. The second users are physically present on sports floor B and are graphically represented via respective avatar-objects on sports floor A (and C, if any). There is no need to generate and display avatar objects for the second users on the interactive display of sports floor B. In case third users being physically present on sports floor C also take part in the game, each third user is graphically represented via a respective avatar-object on sports floor A and B. There is no need to generate and display avatar objects for the third users on the interactive display of sports floor C. Each avatar-object is displayed on a position on the interactive display that corresponds, according to the mapping, to the current position of the real user represented by the avatar on the sports floor where this real user is actually physically present.

Said features may be advantageous, because many users may be able to play an interactive sports or action game together even though they may currently be located in different cities, or even different countries. Each sports floor is preferably equipped with loudspeakers and other equipment that is adapted to transmit acoustic signals, e.g. voice data, from all remote players taking part in the game to the players currently interacting with the sports floor and taking part in the same game. The system of multiple, interactively combined sports floors may be particularly suited for enabling users spread over many different cities or countries to play a game together, e.g. catching games and games of skill to be played in a team.

According to embodiments, the one or more user-related objects are areas around the feed of the first user. The visual properties (e.g., color, shape, and border) of the areas are indicative of a team the first user is assigned to or of a game role assigned to the user by the client application or the LBSN.

For example, the place below the feet of a particular player may be highlighted in a player-specific, team-specific, or gaming role-specific manner in the interactive display. When the player moves across the interactive display, this highlighted place below the player's feet dynamically follows the player. This may be particularly useful in the context of spontaneously forming teams with other players invited via the LBSN, because users who join a game spontaneously typically will not have a jersey in the colors of a certain team.

According to embodiments, the interactive display is configured to receive visualization data via the client application from the LBSN. The visualization data is specific to the first user and/or depends on preferences of the first user specified in the user registry. The interactive display is further configured to display the visualization data in the form of virtual objects in the interactive display.

For example, a user, U1, may always want to play soccer when he or she arrives at a particular sports floor, while another user, U2, may typically play tennis and occasionally do some yoga when visiting the sports floor. The software application that generates the virtual environment shown in the interactive display (e.g., the client application) is configured to enable users U1 and U2 to configure the software application such that the interactive display will automatically show a soccer field when U1 enters the sports floor and will automatically show a tennis court when U2 enters the floor (whereby U2 is enabled to manually change the automatic selection via the menu in case he or she prefers to do yoga rather than play tennis).

According to embodiments, the client application is configured to repeatedly send a list of all identified users currently interacting with the sports floor to the LBSN. The client application thereby enables the LBSN to notify other users whose accounts are linked to an account of one or more of these currently interacting users of the presence of these currently interacting users. The LBSN is configured to notify other users whose accounts are linked to an account of one or more of these currently interacting users of the presence of these currently interacting users.

This may be beneficial as these other users may be attracted to the sports floor not only because of the technical features of the sports floor but also because of the users who are currently using the sports floor.

According to embodiments, the LBSN is configured to assign user accounts to one or more of the places if the sports floor represented by said place was visited by the user represented by the user account at least once. The client application is configured to repeatedly send a list of all identified users currently interacting with the sports floor to the LBSN, thereby enabling the LBSN to automatically notify any user whose account is associated with the place representing the sports floor in the event that the sports floor is unoccupied, in case the list of all identified users is empty. The LBSN is configured to automatically notify any user whose account is associated with the place representing the sports floor in the event that the sports floor is unoccupied, in case the list of all identified users is empty.

According to embodiments, the LBSN is configured to notify the LBSN-registered users currently interacting with the sports floor that a further LBSN-registered user who is linked to at least one of the currently interacting user as a "friend" or "team member" of the fact that the further user approaches the sports floor. For example, the notification can be an alarm message comprising the information that the further user is predicted to reach, based on the further user's current position and movement speed, at a predicted time at the sports floor. In addition, or alternatively, the notification can be an alarm message comprising the information that the further user is predicted to enter a certain area surrounding the sports floor at a predicted time. This may enable the user currently interacting with the sports floor to call or otherwise contact the further user to clarify whether or not the further user actually intends to join the team or to invite the further user to join the team. The invitation may also be submitted automatically by the client application of the user currently interacting with the sports floor to the further user approaching the sports floor.

According to embodiments, the system comprises the LBSN.

According to embodiments, the system further comprises a maintenance robot. The maintenance robot is configured to:
- receiving, from the sensors, from a maintenance management program coupled to the sensors, or from the LBSN, a maintenance trigger message. The maintenance trigger message is indicative that no user is currently interacting with the sports floor;
- in response to the receiving of the maintenance trigger message, automatically enter the sports floor and start to perform a maintenance program on the sports floor; and
- in response to having completed the maintenance program or in response to receiving a maintenance termination message, automatically terminate the maintenance program and leave the sports floor.

According to embodiments, the maintenance robot comprises a further instance of the client program. The further instance is also interoperable with the LBSN. The maintenance robot is registered at the LBSN and is assigned to the one of the places in the places registry representing the sports floor.

According to embodiments, the interactive display is adapted to update its content in response to the first user or any other user interacting with the interactive display.

According to embodiments, the first user has assigned a role of a team game, e.g., soccer, handball, or baseball. The LBSN is configured such that one or more second users are notified of the location of the first user only if their role in the team game is compatible with or supplements the role of the first user and the role of other users belonging to the same team and is already located on the sports floor.

For example, user U1 may be a goalkeeper in handball team T1 of district D1 and may occasionally also play as goalkeeper in a second handball team, T2, of district D2. All handball players of both teams may have registered at the LBSN and may also have specified their respective roles (e.g., goalkeeper, runner, left wing, forward) in the user preferences of the user registry. The user U1 may have many friends in both teams T1 and T2, and when he occasionally enters the sports field, a lot of handball players from the two teams spontaneously join him on the sports field. The LBSN may be configured to automatically monitor the identity and the roles of the handball players currently present on the sports field and may notify other users of first user U1 having entered the sports floor, but only if this other user has a handball role that is not already occupied by one of the players who are already present on the sports floor.

According to embodiments, the client application is or comprises a software module selected from the group comprising the following: a gaming application, a sports application, a sports floor management application, a virtual reality application, and an augmented reality application.

In a further aspect, the invention relates to a computer-implemented method comprising the following: receiving, by each of one or more sensors of a sports floor, the identification data of a first user interacting with the sports floor; receiving, by a client application, the identification data of a first user from one or more sensors upon the first user interacting with the sports floor; the client application being interoperable with an LBSN. The LBSN comprises a user registry and a places registry. The user registry comprises a plurality of user accounts of registered users. Some of the user accounts are interlinked. A link between two user accounts represents a trusted relationship between the two interlinked user accounts. The places registry comprises a plurality of places. Each place is a digital representation of a physical place at a known location. One of the places contained in the places registry represents the sports floor. Then, the client application sends a first message comprising the identification data and location data of the sports floor to the LBSN that enables the LBSN to notify one or more second users (whose accounts are linked to the account of the first user) that the first user has interacted with the sports floor.

In a further aspect, the invention relates to a maintenance robot. The maintenance robot is configured to:
- receiving, from one or more sensors of a sports floor, from a maintenance management program coupled to the sensors, or from an LBSN, a maintenance trigger message. The maintenance trigger message is indicative that no user is currently interacting with the sports floor;
- in response to the receiving of the maintenance trigger message, automatically entering the sports floor and starting to perform a maintenance program on the sports floor; and
- in response to having completed the maintenance program or in response to receiving a maintenance termination message, automatically terminate the maintenance program and leave the sports floor.

According to embodiments, the maintenance robot comprises an instance of the client program. The further instance is also interoperable with the LBSN. The maintenance robot is registered at the LBSN and is assigned to the one of the places in the places registry representing the sports floor.

### Short description of the figures

In the following, embodiments of the invention are explained in greater detail, by way of example only, referencing the drawings in which:
- Fig. 1: shows a social network of multiple persons;
- Fig. 2: shows a system comprising a sports floor and an LBSN client application;
- Fig. 3: shows another system with a sports floor and an LBSN client application;
- Fig. 4: shows another system with a sports floor and an LBSN client application;
- Fig. 5: shows another system with a sports floor and an LBSN client application;
- Fig. 6: shows another system with a sports floor and a maintenance robot comprising an LBSN client application;
- Fig. 7: shows a sports floor with a sensor layer;
- Fig. 8: shows an interactive sports floor that tracks and highlights individual users;
- Fig. 9: depicts an interactive sports floor differentially highlighting users of different teams; and
- Fig. 10: is a flowchart of a method for integrating a sports floor in an LBSN.

### Detailed description

Like-numbered elements in these figures are either equivalent elements or elements that perform the same function. Elements that have been discussed previously will not necessarily be discussed in later figures if the function is equivalent.

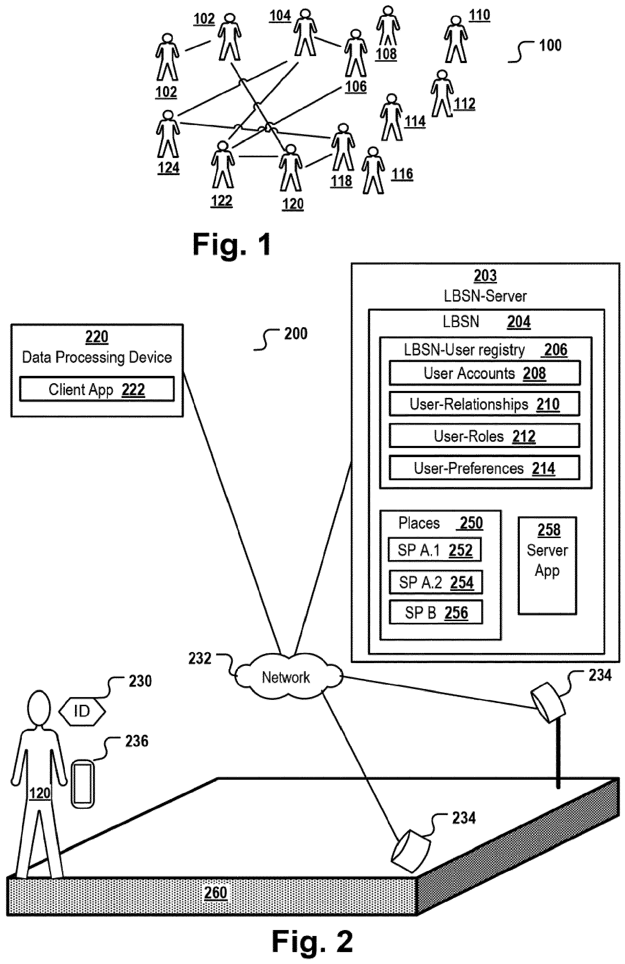

**Figure 1** depicts a social network, 100, of real persons, 102-124, that can be reflected in the user registry of an LBSN in the form of interlinked user accounts of registered users. A social network is a social structure made up of individuals connected by one or more specific types of interdependency, such as friendship, common interests, and shared properties (e.g., being a member of a particular sports team or having compatible or incompatible roles in a role-playing or a sports game). Generally, a social networking service builds on and reflects the real-life social networks among people through online platforms such as a website, providing ways for users to share ideas, activities, events, and interests over the internet. Embodiments of the invention integrate sports floors into social networks, in particular into location-based social networks, thereby reflecting real-life networks among people and places in a highly dynamic and versatile manner.

**Figure 2** shows a system 200 comprising a sports floor 260 and an LBSN client application 222. The sports floor 260 is preferably an elastic floor that is particularly suited for various sporting activities, such as soccer, handball, and American football as well as for gymnastics and yoga. The sports floor 260 may also be suited for various role-playing games, games having an entertaining and/or educating character, and games for kids. The sports floor 260 can be a special-purpose floor, e.g., an artificial grass floor. The sports floor can be an indoor floor or an outdoor floor. The sports floor comprises or is attached to one or more sensors 234 that capture personalized data of any user 120 who enters or otherwise interacts with the sports floor. For example, the sensors 234 can be fingerprint sensors positioned at an entrance to the sports floor, cameras operatively coupled to an image analysis and facial recognition software, or pressure sensors positioned within a grid-like structure on many positions within or below the sports floor 260. For example, the cameras may be adapted to capture an image of a face or the whole body of a person, basically in any position on the sports floor. In other embodiments, the cameras may be selectively positioned at the entrance to the sports floor. The sensors are adapted to identify, alone or in combination with other software and hardware devices, any user who enters or otherwise interacts with the sports floor and who was previously registered at the facility operating the sports floor.

According to some embodiments, the sports floor can, in addition, comprise sensors such as pressure sensors, weight sensors, speed-of-touch sensors, proximity sensors, temperature sensors, color sensors, magnetic conductivity sensors, electrical resistance sensors, electrical capacity sensors, humidity sensors, and movement sensors, in particular speed sensors, acceleration sensors, and direction sensors. The data acquired by these additional sensors can also be provided to the client application and can be used for identifying a particular user or for tracking a user while he or she is moving across the sports floor. In addition, or alternatively, the information provided by these additional sensors can be used by the client application for adapting the visual environment that is displayed on an interactive screen contained in or associated with the sports floor.

The invention is particularly beneficial in the context of indoor floors, because the sensors used for identifying the users who enter or otherwise interact with the sports floor are part of or are physically attached to the sports floor and are not part of the mobile phone of the user. This ensures that the users are automatically identified, even when a GPS or internet connection is not available (as is commonly the case in indoor sporting facilities).

The system 200 comprises a client application 222 that is interoperable with an LBSN 204. The client application runs on a data processing device 220, whereby the data processing device 220 can be, for example, a terminal positioned at the entrance of the sports field, a smartphone 236 of a user 120, or a desktop computer that is typically maintained by the operator of the sports floor 260. The client application and the LBSN are connected via a network, e.g., the internet 232. Optionally, but not necessarily, the user has assigned a smartphone 236 that is also connected or connectable to the network 232. For example, the operator of the sports floor can offer WLAN connection for enabling the user to connect his or her phone 236 to the network 232. This may be necessary if the client application 222 is installed on the mobile phone 236 of the user. If the client application is installed in a terminal, the user is not required to carry a mobile phone.

The LBSN 204 is hosted on an LBSN server 203, which can be a monolithic server computer or a distributed cloud computer system. The LBSN comprises a user registry 206 comprising user accounts 208 of hundreds or even thousands of users having registered at the LBSN. The user registry 206 further comprises a plurality of user relationships 210, whereby each relationship (that corresponds to a link or edge in a social network graph) indicates a trusted relationship between two users. The relationship can be multidirectional or unidirectional. The relationship can indicate, for example, that two users whose accounts are interlinked are friends, working colleagues, team colleagues in a sports team, and the like. Preferably, the user registry 206 further comprises user roles 212, which are assigned to the individual user accounts. For example, the user roles can be trainer, goalkeeper, runner, left wing, forward, and the like. The user registry 206 can further comprise user preferences 214, which indicate the sports-related or game-related preferences of a user. For example, the preferences assigned to a user may indicate the type of sports or the type of game a user typically prefers to play when entering a particular sports floor. These preferences can be read by a client application and sent to an interactive display of the sports floor, thereby ensuring that the sports floor automatically displays the virtual environment of the preferred type of sport or game. The preferences can also comprise difficulty level, virtual objects (such as armor), and monetary resources or skills already obtained by a particular user for a particular game. In some embodiments, the user roles 212 and the user preferences 214 can also be specified and stored within the client application or within a separate sporting application on a terminal or on a user's mobile phone in addition to or instead of the LBSN user registry.

In addition, the LBSN 204 comprises a places registry 250, which is a list of a plurality of places 252, 254, 256 that respectively represent a sports floor in the real world. For example, sports floors 252 and 254 can be located within the same building and can be operated by the same organization, A, while sports floor 256 can be an outdoor sports floor operated by another organization, B.

In some embodiments, the LBSN 204 is a standard LBSN that covers many different types of places, including sports floors, but also other places, such as restaurants, cinemas, schools, hospitals, and the like. In this case, one or more additional server applications 258 that are interoperable with the LBSN 204 can provide sports-related functions, such as the evaluation of user roles in preferences before notifying LBSN friends of the presence of a particular user on a particular sports floor. In other embodiments, the LBSN 204 is a special-purpose LBSN that comprises locations representing solely sports floors and playgrounds.

According to some embodiments, the client application 222 enables a user who has physically interacted with the sports floor at least once to like, rate, and check in to the sports floor. Every time a user triggers an event in relation to the sports floor 260 (e.g., entering the sports floor, leaving the sports floor, rating the sports floor), his or her LBSN friends see it because the LBSN is configured to automatically notify other users whose accounts are linked to this user of the events created by the user. According to some embodiments, the user is able to rate the quality of the sports floor or the quality of the organization maintaining the sports floor by attaching an interactive screen, whereby the interactive screen can be the screen of the user's smartphone, a touch screen of a terminal located in spatial vicinity of the sports floor, or an interactive screen of the sports floor itself. For example, the rating system can be a star rating system, ranging from 0 to a maximum number of stars, e.g., five.

According to embodiments, the LBSN is configured such that the greater the number of persons who have checked in to a particular sports floor and the higher the rating of a particular sports floor, the higher the chances are that a particular sports floor is suggested by the LBSN automatically when the LBSN determines that a registered user is located in spatial vicinity of the sports floor.

According to embodiments, the LBSN is configured to continuously receive current location information from all its registered users. If the LBSN determines that the registered user is close to a sports floor 260 represented by a place in the places registry (e.g., when the user carrying a GPS-enabled mobile phone has entered a particular district or street where the sports floor is located or is determined to be closer to the sports floor than a predefined distance threshold), the LBSN automatically notifies this user of the existence of the sports floor and where it is located. According to preferred embodiments, the LBSN, in addition, notifies the user of parameters, such as the current occupation state and preferably also the rating of the sports floor. For example, the parameters can be the size, the opening and closing times, and the types of virtual sports environments supported by the sports floor. The current occupation state comprises the numbers and preferably also the roles and/or names of all users currently interacting with the sports floor. This may be beneficial because even if the user who is notified of the sports floor does not know any of the users currently playing on this sports floor, the roles of all the users currently on the sports floor may indicate whether an additional user having a particular role or skill is needed for completing a team.

For example, a field worker (or any other type of user) walks along a street in a foreign city after work. He or she opens the client app, which is interoperable with the LBSN, on his or her smartphone. The client app determines the current position of the field worker via the GPS functionality of the smartphone and suggests one or more nearby sports floors, respectively represented as places in the LBSN places registry. Additional information related to each sports floor, in particular the users and the roles of those currently interacting with each sports floor, is retrieved by the client app from the LBSN and displayed to the field worker on the smartphone screen. The field worker may then select one of the suggested sports floors because of, for example, its size or distance or, in particular, because the identities and roles of the users currently interacting with a sports floor are appealing to the field worker. For example, the field worker may identify a friend, customer, or colleague as being one of the users who is currently interacting with the particular sports floor and may therefore decide to visit this particular sports floor. It may also be the case that the LBSN indicates that a particular sports floor is currently unoccupied. This can also be a reason for the field worker to visit a specific sports floor. The field worker then selects one of the suggested nearby sports floors. Optionally, the client application can be configured to guide the field worker to the selected sports floor. For example, the client application can be interoperable with Google maps or a similar online map service.

According to some embodiments, the information related to each sports floor that is displayed to the field worker can comprise, for example, information generated explicitly or implicitly by other registered LBSN users whose accounts are linked to the LBSN account of the field worker as LBSN friends. For example, the additional information can comprise information that a particular LBSN friend has liked, visited (checked in), rated, or recommended the sports floor.

The client application may enable a user to request the client application to suggest a plurality of sports floors in spatial vicinity of the current position of the user, may enable the user to recommend a particular sports floor he or she is currently visiting, and to like and to comment on a particular sports floor. The client application may comprise a history of sports floors already visited by the user. The history may be indicative of the number of visits of the user to each sports floor and of the number of visits of any LBSN friend of the user to a particular sports floor, if any.

According to some embodiments, the user is enabled to select a subcategory of sports floors, e.g., sports floors supporting interactive displays, soccer sports floors, artificial turf-based sports floors, sports floors supporting a particular role-playing game, and the like.

According to embodiments, an operator of a particular sports floor is enabled to create a place representing the sports floor in the LBSN, e.g., by registering the sports floor at the LBSN and by providing sports floor-associated data, in particular the location of the sports floor and the types of sports supported by the sports floor.

The sensors are configured to capture identification data 230 of the user in response to the user interacting with the sports floor. The client may further process the identification data and send the identification data, together with location data of the sports floor, to the LBSN. The location data can be any data that explicitly or implicitly reveals the location of the sports floor 260 to the LBSN. For example, the location data can be an identifier of the sports floor that is assigned in the places registry of the LBSN to a data record representing the sports floor and comprising the geocoordinates or address of the sports floor. The LBSN is configured to use the sports floor ID or sports floor location data received with the first message for identifying one of the places in the places registry that represents the sports floor. The LBSN preferably integrates the sports floor ID or sports floor location data with the notification message sent to the second users to enable other users to meet the first user on the sports floor.

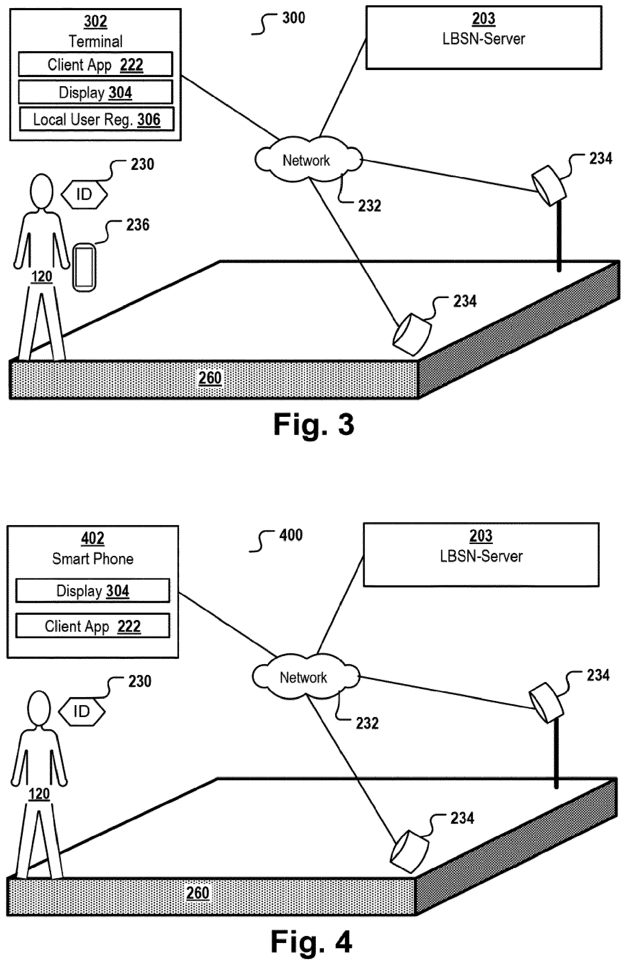

**Figure 3** shows another system 300 with a sports floor 260 and an LBSN client application 222. In system 300, the client application 222 is implemented as an application program that is hosted on a terminal 302. For example, the terminal can be a permanently installed terminal at the entrance area to a sports floor, e.g., at the entrance to a building or room in which the sports floor is located or at the entrance to an outdoor sports floor. Typically, the terminal 302 comprises a display 304, e.g., an LCD display or a touch-screen display. Installing the client application that integrates the sports floor 260 with the identification data 230 of the user captured by the sensors 234 to the LBSN may have the advantage that the user 120 may, but does not have to, carry a smartphone 236 with him or her. For example, the sensors 234 can be fingerprint sensors or facial recognition sensors that identify the user 120 upon the user's interacting with the sports floor. The sensors can forward the captured identification data 230 of the user to the client application without any interaction with a user's smartphone. The sensors may also transform the captured identification data of the user into a different format that can be interpreted by the client application and/or the LBSN user registry. For example, the originally captured identification data can be a fingerprint image or face image, and the transformed identification data can be the user's name and address. The embodiment depicted in figure 3 is particularly advantageous in the case of indoor sports floors where connectivity of a smartphone to the LBSN via a mobile telecommunications network connection is unstable or not possible at all. The embodiment is also advantageous for types of sports for which the users typically leave their smartphones in the changing room.

Optionally, the terminal can comprise a local user registry 306, comprising accounts of users having registered at the operator of the sports floor. User registration can be performed e.g., by providing biometric data 230, such as fingerprint data, face image data, or the like. The client application 222 in the terminal may be configured to identify a user's local user account, based on the user's biometric data captured by the sensors 234. The client application in the terminal may further be configured to transform the captured identification data 230 used for identifying a corresponding local user account in the local user registry into transformed identification data that is forwarded to the LBSN. The transformed identification data enables the LBSN to identify a user account in the LBSN user registry that corresponds to this particular user.

**Figure 4** shows another system 400 with a sports floor 260 and an LBSN client application 222, whereby the client application is installed on a mobile telecommunications device 402, e.g., a smartphone, a tablet computer, or a notebook, of the user 120. This embodiment may be particularly advantageous because it allows for better personalization of client-side LBSN functionalities.

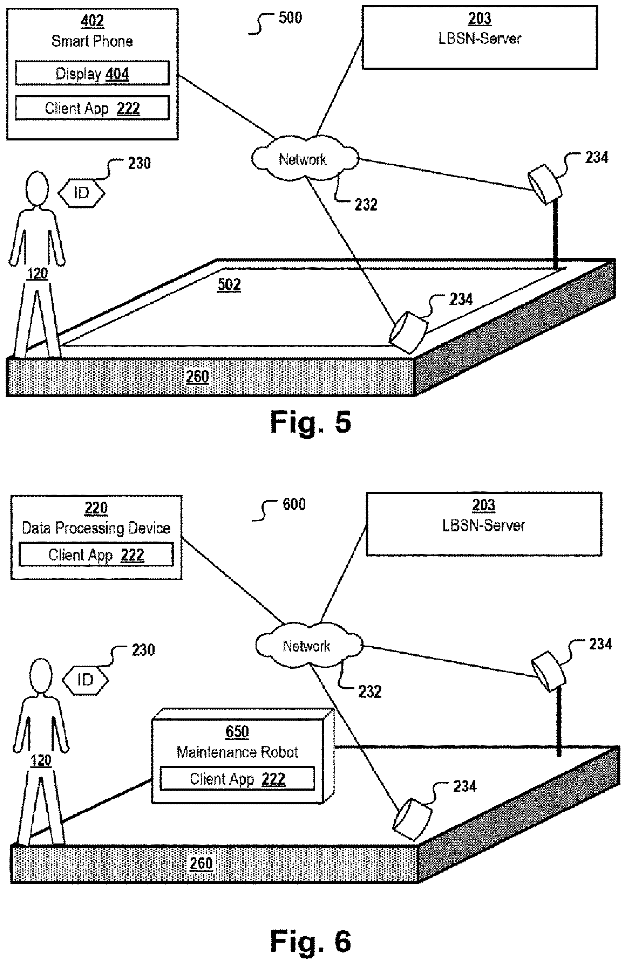

**Figure 5** shows another system 500 with a sports floor 260 and an LBSN client application 222. The system depicted in figure 5 is characterized by an interactive display 502. The content displayed on said display 502 is generated by sports or gaming software or a software module. This sports/gaming software or software module can be installed on a computer maintained by, for example, the operator of the sports floor or can alternatively be installed on the smartphone of the user 120. Alternatively, the content displayed on said display 502 is generated by a sub-module of the LBSN client application 222, which may support one or more types of sports or role-playing games and may be configured to generate a virtual environment that supports a particular type of sport or game. For example, the virtual environment can be a sports floor comprising a particular arrangement of lines and zones that have a predefined meaning in the respective sport or game.

The interactive display 502 can comprise or be connected to a plurality of sensors that capture and monitor the movements of one or more users or objects in contact with the sports floor 620. The interactive display can be implemented, for example, as an interactive surface that is resistant to wear and tear and shocks. The display 502 is connected to the sensors and to the sports or gaming application or module that generates the virtual environment for a particular sport or game to be displayed via the interactive display 502.

According to preferred embodiments, the sports or gaming application or module is part of or is interoperable with the LBSN client application 222 and is able to retrieve user preferences and user roles stored in the LBSN registry for each identified user interacting with the sports floor. At least some of the preferences and role data of the identified user are graphically represented by visual objects displayed on the screen 502 or are used for modifying the displayed sports or gaming environment, depending on the user's preferences. The interactive surface can also be used in conjunction with worn or attached objects of the user, e.g., smart watches or RFID tags, or with other objects such as a ball, a bat, or a toy.

According to embodiments, the sensors coupled to the interactive display 502 measure the extent of pressure applied against the sports floor 260 by each user and/or or each object. The extent of pressure and the corresponding location of the object are forwarded to the sports or game application or module and enable the sports/game application or module to generate visual content to be displayed on the interactive display 502 of the sports floor 260.

The display 502 can comprise multiple interactive display modules joined to form a single integrated display of arbitrary size.

According to embodiments, the visual content displayed on the display 502 comprises predefined visual spots or patterns that allow an image-processing module of the sport or game application to calculate the location of a user or an object relative to said predefined visual spots or patterns and hence allows calculating the location where an interaction between the user or the object and the sports floor happened.

The interactive display 502 is adapted to detect multiple interactions concurrently so that multiple users and objects can be tracked and their actions can have an impact on the game and the virtual environment displayed.

**Figure 5** shows an interactive display 502 that is fully integrated into the sports floor. This means that the light source (e.g., an LED matrix or an LCD or OLED display) that generates the visual content is an integral element of the sports floor 260.

According to other embodiments (not shown), the visual content of the interactive display 502 is generated by projectors positioned above the surface of the sports floor. For example, the projectors can be attached to the ceiling or to the side walls of a room comprising the sports floor.

**Figure 6** shows another system with a sports floor and a maintenance robot 650.

The maintenance robot, according to the embodiment depicted in figure 6, comprises an LBSN client application 222 that is interoperable with the LBSN 204. The robot is registered as a "further user" or as a different object entity, e.g., as a "maintenance device," and is assigned to the place in the LBSN places registry that represents the sports floor 260. When the sensors 234 determine that no user is currently interacting with the sports floor 260, or when the sensors determine that no user has been interacting with the sports floor for at least a minimum time interval of, for example,15 minutes, the sensors notify, for example, via the client application 222 of the data-processing device 220, the LBSN that the sports floor 260 is currently not in use. In this case, the LBSN is configured to send a maintenance trigger message to all maintenance robots 650 assigned to the place representing this unused sports floor. In response to receiving a maintenance trigger message from the LBSN, each maintenance robot is configured to automatically execute a maintenance program on the sports floor 260 that is currently not in use. For example, the sports floor can be cleaned, brushed, irrigated, or painted. When the sports floor is an artificial turf or a hybrid-turf sports floor, the maintenance robot can be configured to level the infill, to replenish lost infill, to clean the infill, to brush up trampled-down fibers, to irrigate natural grass plants, and the like.

According to preferred embodiments, the LBSN is configured to send a maintenance termination message to all maintenance robots 650 assigned to the place representing this unused sports floor in response to being notified that a user 120 has entered or otherwise started interacting with the sports floor. In response to receiving the maintenance termination message from the LBSN, each maintenance robot is configured to automatically stop the currently executed maintenance program and to leave the sports floor 260 immediately.

According to other embodiments (not shown), the maintenance robot comprises a client application that is interoperable with the sensors 234 but not with the LBSN. When the sensors 234 determine that no user is currently interacting with the sports floor 260, or when the sensors determine that no user has been interacting with the sports floor for at least a minimum time interval of, for example, 15 minutes, the sensors notify the maintenance robot directly that the sports floor 260 is currently not in use. In other words, the sensors 234 or a maintenance management application program (MMAP) that is operatively coupled to the sensors 234 sends a maintenance trigger message to all maintenance robots 650 assigned to the unused sports floor in response to the sensors determining that the sports floor is unoccupied. For example, the sensors or the MMAP can comprise a maintenance robot registry that assigns one or more maintenance robots to the sports fields comprising the sensors 234. In response to receiving a maintenance trigger message from the sensors or the MMAP, each maintenance robot is configured to automatically execute a maintenance program on the sports floor 260 that is currently not in use, as described above. According to preferred embodiments, the sensors or the MMAP is configured to send a maintenance termination message to all maintenance robots 650 assigned to the unused sports floor in response to the sensors determining that a user 120 has entered or otherwise started interacting with the sports floor. In response to receiving the maintenance termination message from the sensors or the MMAP, each maintenance robot is configured to automatically stop the currently active maintenance program and to leave the sports floor 260 immediately.

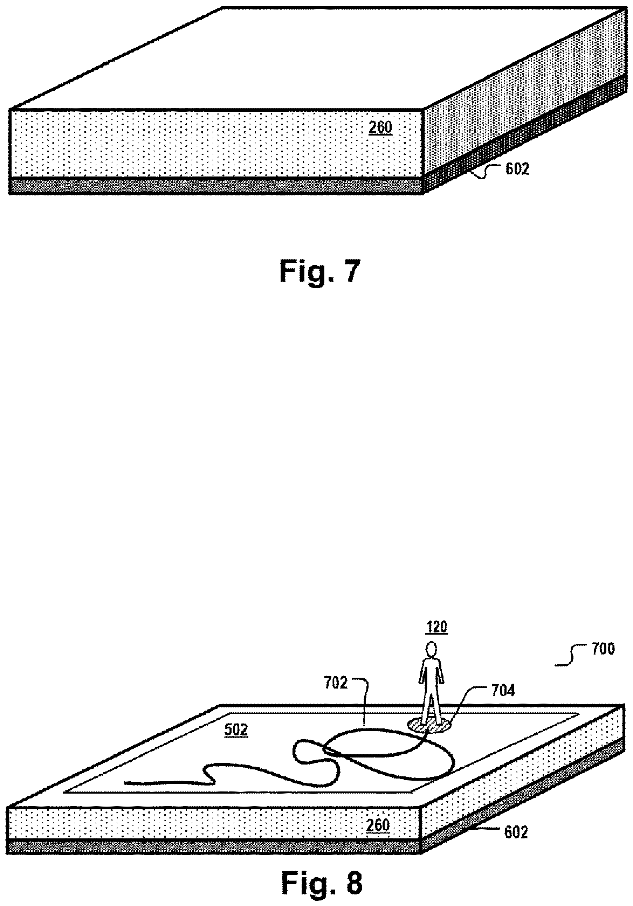

**Figure 7** shows a sports floor 260 with a sensor layer 602. For example, the sensors can be arranged in a grid-like structure within or below the sports floor 260. The sensors in the sensor layer can comprise the sensors. For example, movement and pressure sensors can capture a movement profile of any user who walks or runs on the sports floor and use the movement profile for identifying a particular person. In addition, or alternatively, the sensor layer can comprise further sensors that provide current position and movement data of all users currently interacting with the sports floor to a sports and gaming application that generates a virtual environment that is to be displayed on an interactive display 502 of the sports floor. The sensors of the sensor layer can comprise a mixture of these two different types of sensors or the same set of sensors, e.g., movement and pressure sensors may be used both for identifying users and for dynamically modifying the content of the sports or gaming environment displayed on an interactive display of the sports field. Preferably, the distance of the sensors from the next sensor is less than 50 centimeters, more preferably less than 30 centimeters, in order to provide a high-resolution sensing layer 602.

**Figure 8** shows an interactive sports floor that tracks and highlights individual users. For example, the curved line 702 illustrates the tracked movement of user 120 across the sports floor 620. If the sports floor comprises an interactive display 502, as depicted in figure 8, and if the selected sports or gaming application supports this feature, the movement trajectory of the user may be displayed and the track 702 is highlighted on the floor. However, it is also possible that the tracked movement trajectory is merely monitored and used, for example, for identifying the user and is not displayed to other users.

The interactive display may be adapted to highlight a region 704 in spatial proximity to the user 120, whereby the visual properties of this region, e.g., its color, size, border shape, or border color, may depend on the user's identity, role, or preferences stored in the user registry of the LBSN or in a local registry maintained by the operator of the sports floor. For example, skills, virtual gadgets, or armor acquired by a user in a particular game may be displayed in spatial proximity to the user. When the user changes position, the relative distance of the region 704 and the user remains constant, i.e., the highlighted region follows the movements of the user.

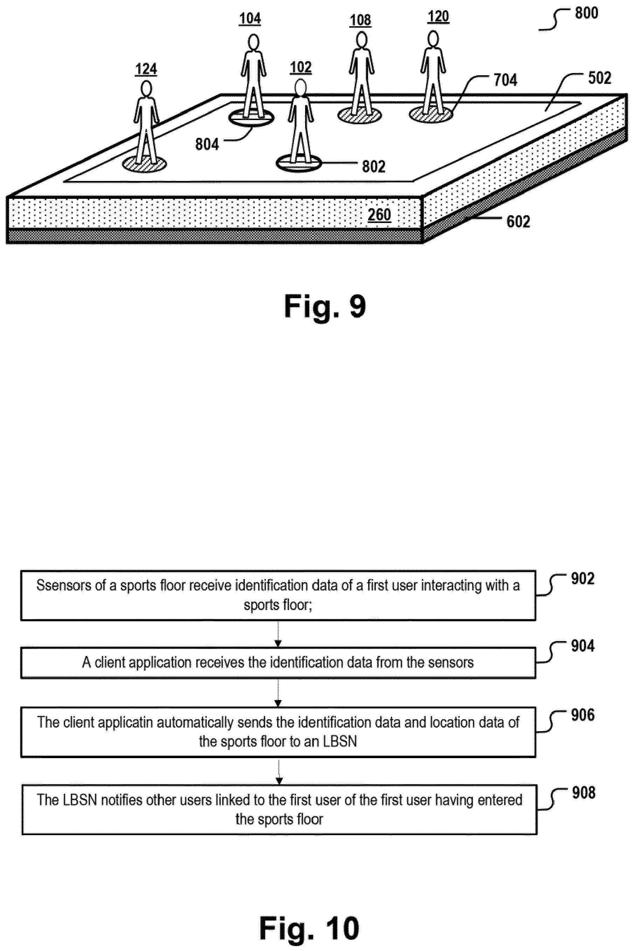

**Figure 9** depicts an interactive sports floor differentially highlighting users of different teams. For example, users 124, 108, and 120 may be members of a first team, e.g., a first soccer team, while users 104 and 102 may be members of a different, second soccer team. The first and the second teams play against each other. In the spatial proximity of each user interacting with the sports floor, a region 804, 802, 704 in spatial proximity of each of the identified users is displayed. The visual properties of these regions thereby depend on the team the user is a member of. For example, the color of the regions 802 and 804, shown below the feet of users 102 and 104, may be red to indicate that these users are members of the second team, while the color of the regions below the feet of users 124, 108, and 120 may be blue to indicate that these users are members of the first team. This feature may be particularly beneficial for spontaneously organized team sports, as the users typically do not carry jerseys of any particular color with them.

**Figure 10** is a flowchart of a computer-implemented method for integrating a sports floor in an LBSN. In the first step 902, each of one or more sensors 234 and 602, which are integrated in or operatively coupled to a sports floor 260, receive identification data 230 of a first user 120 interacting with the sports floor. For example, the sensors can be fingerprint sensors and receive fingerprint data from a first user upon entering the sports floor. The fingerprint data can be used by the sensors or by a software module integrated or operatively coupled to the sensors to identify the user who enters the sports floor. As a result, transformed identification data, e.g., the name and address of the identified user, is used as the identification data of the user and is forwarded from the sensors to a client application 222 that is interoperable with an LBSN 204. For example, the LBSN can be an LBSN as described with reference to figure 2.

In step 904, the client application 222 receives the identification data or the transformed identification data of the first user from one or more sensors. In some embodiments, the client application processes the received identification data and transforms the received identification data into a format that is interpretable by the LBSN and allows the LBSN to identify an account of a user having registered at the LBSN, based on the identification data to be provided in the next step 906, from the client application to the LBSN.

Next, in step 906, the client application sends a first message to the LBSN. The first message comprises the identification data that is indicative of the identity of the first user and location data of the sports floor to the LBSN. For example, the location data of the sports floor can also be provided by the sensors via the client application, together with the identification data. The location data can be explicit or implicit. For example, implicit location data could be an identifier of the sports floor that enables the LBSN to identify a place in the places registry that represents the particular sports floor that is coupled to the sensors having provided the location data. The GPS coordinates of the sports floor may not be transferred explicitly but rather may be stored in the places registry of the LBSN, in association with the data record ("place") that represents the sports floor. Explicit location data could be the GPS coordinates or the postal address of the sports floor or a combination of the GPS coordinates of a building and a room number. The first message can have any format. For example, the first message can be an XML message, an email message, a remote procedure call, or the like.

The data contained in the first message enables the LBSN 204 to identify one or more second users whose accounts are linked to the account of the first user in the user registry 206 (and hence represent LBSN friends of the first user) and enables the LBSN to notify these identified second users of the observation that the first user has interacted with the sports floor. For example, the LBSN can send in step 908 a second message to each of the identified second users, whereby each second message comprises at least an identifier, e.g., a location of the sports floor 260 and of the first user, whose interaction with the sports floor triggered the sending of the first message from the client application to the LBSN. This feature enables the second users to join the first user spontaneously.

In some embodiments, the process of sending the second message is more complex. For example, the LBSN may send the second message selectively to those second users whose roles are compatible with the role of the first user or to second users who have specified in their respective preferences 214 the type of sport or game that was also currently chosen by the first user. In addition, or alternatively, each second message may comprise additional information related to the first user and/or to other users who currently interact with the sports floor or who are related to the sports floor itself, e.g., rating information, pictures of the sports floor, comments, or the like.

### LIST OF REFERENCE NUMERALS

- 100: social network
- 102-124: users/players
- 200: system
- 203: LBSN server
- 204: location-based social network (LBSN)
- 206: user registry
- 208: accounts of registered users
- 210: user relationships
- 202: user roles
- 214: user preferences
- 220: data-processing device
- 222: client application
- 230: identification data
- 232: network
- 234: sensors
- 236: mobile phone
- 250: places registry
- 252-256: places
- 258: server application
- 300: system
- 302: terminal
- 304: terminal display
- 306: local user registry
- 400: system
- 402: smartphone
- 500: system
- 504: interactive display
- 602: sensors/sensor layer
- 650: maintenance robot
- 700: sports floor with sensor layer and interactive display
- 702: a user's track across the sports floor
- 704: visual object assigned to and dynamically following a particular user
- 800: sports floor 700 with multiple users
- 802: visual object assigned to and dynamically following user 102
- 804: visual object assigned to and dynamically following user 104
- 902-908: steps

## Claims

1. A system (200, 300, 400, 500) comprising:
- a sports floor (260) comprising:
∘ one or more sensors (234, 602), each sensor being adapted to receive (902) identification data of a first user (120) interacting with the sports floor;
- a client application (222) being interoperable with a location-based social network (LBSN) (204), wherein the LBSN comprises:
∘ a user registry (206) comprising a plurality of user accounts (208) of registered users, wherein some of the user accounts are interlinked, a link between two user accounts representing a trusted relationship between the two interlinked user accounts;
∘ a places registry (206) comprising a plurality of places (252, 254, 256), each place being a digital representation of a physical place at a known location, wherein one of the places represents the sports floor;
the client application being configured to:
∘ receive (904) the identification data (230) of a first user from the one or more sensors upon the first user interacting with the sports floor;
∘ automatically sending (906) a first message comprising the identification data and location data of the sports floor to the LBSN to enable the LBSN to notify one or more second users whose accounts are linked to the account of the first user that the first user has interacted with the sports floor.

2. The system of claim 1, further comprising:
- a plurality of further sports floors, each further sports floor comprising one or more further sensors, each further sensor being adapted to receive identification data of a user upon the user interacting with the further sports floor, wherein at least some of the further sports floors are located within a 500-meter radius from the center of the sports floor.

3. The system of any one of the previous claims, the sports floor being an indoor sports floor.

4. The system of any one of the previous claims, the client application being installed on a mobile telecommunications device (402) assigned to the first user and/or being installed on a terminal (302) positioned in proximal vicinity of the sports floor.

5. The system of any one of the previous claims, the client application being further configured to:
- receiving a second message from the LBSN in response to the first message; and
- causing a display (236, 304, 404, 502) to change its content depending on the content in the second message.

6. The system of any one of the previous claims, each sensor being selected from a group comprising:
- a sensor of biometric data;
- a near-field communication (NFC) interface adapted to receive a user ID of the first user provided by an app that is interoperable with the LBSN.

7. The system of any one of the previous claims, the system comprising one or more location sensors (602) adapted to track (702) the first user and any other identified person while moving across the sports floor and being adapted to automatically send current location data of the first user and the other identified persons, if any, to the client application.

8. The system of any one of the previous claims, the interaction of the first user with the sports floor being selected from a group comprising:
- entering the sports floor;
- moving across the sports floor;
- applying pressure to the sports floor;
- swiping or otherwise touching the sports floor with a hand or a sporting device.

9. The system of any one of the previous claims, the sports floor comprising an interactive display (502).

10. The system of claim 9, the client application being adapted to cause the interactive display to:
- show one or more user-related objects (704, 802, 804), the position of the one or more user-related objects relative to the first user remaining constant while the user moves across the sports floor; and/or
- show one or more avatar-objects, each avatar object being a graphical representation of a remote human user currently interacting with a remote sports floor, the position of the avatar object on the interactive display of the sport floor being dynamically determined by performing a real-time mapping of the position of the remote user on the remote sports floor to a respective position on the interactive display of the sport floor where the avatar-object representing said remote user is to be displayed.

11. The system of any one of the previous claims 9-10, the interactive display being configured to:
- receiving visualization data via the client application from the LBSN, the visualization data being specific to the first user and/or depending on preferences of the first user specified in the user registry; and
- displaying the visualization data in the form of virtual objects in the interactive display.

12. The system of any one of the previous claims, further comprising a maintenance robot (650), the maintenance robot being configured to:
- receive a maintenance trigger message from the sensors (234), from a maintenance management program coupled to the sensors, or from the LBSN (204), the maintenance trigger message being indicative that no user is currently interacting with the sports floor;
- automatically enter the sports floor and start to perform a maintenance program on the sports floor in response to receiving a maintenance trigger message; and
- automatically terminate the maintenance program and leave the sports floor in response to having completed the maintenance program or in response to receiving a maintenance termination message.

13. The system of claim 12, the maintenance robot comprising a further instance of the client program that is interoperable with the LBSN, the maintenance robot being registered at the LBSN and being assigned to the one of the places in the places registry representing the sports floor.

14. The system of any one of the previous claims, wherein the client application is configured to repeatedly send a list of all identified users currently interacting with the sports floor to the LBSN, thereby enabling the LBSN to notify other users whose accounts are linked to an account of one or more of these currently interacting users of the presence of these currently interacting users.

15. The system of any one of the previous claims, wherein the LBSN is configured to assign user accounts to one or more of the places if the sports floor represented by said place was visited by the user represented by the user account at least once, wherein the client application is configured to repeatedly send a list of all identified users currently interacting with the sports floor to the LBSN, thereby enabling the LBSN to automatically notify any user whose account is associated with the place representing the sports floor (260) in the event that the sports floor is unoccupied or the list of all identified users is empty.

16. The system of any one of the previous claims, the first user having assigned a role of a team game, the LBSN being configured such that one or more second users are notified of the location of the first user only if their role in the team game is compatible with or supplements the role of the first user and the role of other users belonging to the same team and which are already located on the sports floor.

17. A computer-implemented method comprising:
- receiving (902), by each of one or more sensors (234, 602) of a sports floor (260), identification data (230) of a first user (120) interacting with the sports floor;
- receiving (904), by a client application (222), the identification data of a first user from the one or more sensors upon the first user interacting with the sports floor, the client application being interoperable with a location-based social network (LBSN), wherein the LBSN comprises:
∘ a user registry (206) comprising a plurality of user accounts (208) of registered users, wherein some of the user accounts are interlinked, a link between two user accounts representing a trusted relationship between the two interlinked user accounts;
∘ a places registry (206) comprising a plurality of places (252, 254, 256), each place being a digital representation of a physical place at a known location, wherein one of the places represents the sports floor;
- automatically sending (906), by the client application, a first message comprising the identification data and location data of the sports floor to the LBSN to enable the LBSN to notify (908) one or more second users whose accounts are linked to the account of the first user that the first user has interacted with the sports floor.

18. A maintenance robot (650), the maintenance robot being configured to:
- receive a maintenance trigger message from sensors (234) of a sports floor (260), from a maintenance management program coupled to the sensors, or from an LBSN (204), the maintenance trigger message indicating that no user is currently interacting with the sports floor;
- automatically entering the sports floor and starting to perform a maintenance program on the sports floor in response to the receiving of the maintenance trigger message; and
- automatically terminating the maintenance program and leaving the sports floor in response to having completed the maintenance program or in response to receiving a maintenance termination message.

## Amended claims

### Amended claims in accordance with Rule 137(2) EPC.

1. A system (200, 300, 400, 500) comprising:
- a sports floor (260) comprising:
∘ one or more sensors (234, 602), each sensor being adapted to receive (902) identification data of a first user (120) interacting with the sports floor;
- a client application (222) being interoperable with a location-based social network (LBSN) (204), wherein the LBSN comprises:
∘ a user registry (206) comprising a plurality of user accounts (208) of registered users, wherein some of the user accounts are interlinked, a link between two user accounts representing a trusted relationship between the two interlinked user accounts;
∘ a places registry (206) comprising a plurality of places (252, 254, 256), each place being a digital representation of a physical place at a known location, wherein one of the places represents the sports floor;
the client application being configured to:
∘ receive (904) the identification data (230) of a first user from the one or more sensors upon the first user interacting with the sports floor;
∘ automatically sending (906) a first message comprising the identification data and location data of the sports floor to the LBSN to enable the LBSN to notify one or more second users whose accounts are linked to the account of the first user that the first user has interacted with the sports floor.

2. The system of claim 1, further comprising:
- a plurality of further sports floors, each further sports floor comprising one or more further sensors, each further sensor being adapted to receive identification data of a user upon the user interacting with the further sports floor, wherein at least some of the further sports floors are located within a 500-meter radius from the center of the sports floor.

3. The system of any one of the previous claims, the sports floor being an indoor sports floor.

4. The system of any one of the previous claims, the client application being installed on a mobile telecommunications device (402) assigned to the first user and/or being installed on a terminal (302) positioned in proximal vicinity of the sports floor.

5. The system of any one of the previous claims, the client application being further configured to:
- receiving a second message from the LBSN in response to the first message; and
- causing a display (236, 304, 404, 502) to change its content depending on the content in the second message.

6. The system of any one of the previous claims, each sensor being selected from a group comprising:
- a sensor of biometric data;
- a near-field communication (NFC) interface adapted to receive a user ID of the first user provided by an app that is interoperable with the LBSN.

7. The system of any one of the previous claims, the system comprising one or more location sensors (602) adapted to track (702) the first user and any other identified person while moving across the sports floor and being adapted to automatically send current location data of the first user and the other identified persons, if any, to the client application.

8. The system of any one of the previous claims, the interaction of the first user with the sports floor being selected from a group comprising:
- entering the sports floor;
- moving across the sports floor;
- applying pressure to the sports floor;
- swiping or otherwise touching the sports floor with a hand or a sporting device.

9. The system of any one of the previous claims, the sports floor comprising an interactive display (502).

10. The system of claim 9, the client application being adapted to cause the interactive display to:
- show one or more user-related objects (704, 802, 804), the position of the one or more user-related objects relative to the first user remaining constant while the user moves across the sports floor; and/or
- show one or more avatar-objects, each avatar object being a graphical representation of a remote human user currently interacting with a remote sports floor, the position of the avatar object on the interactive display of the sport floor being dynamically determined by performing a real-time mapping of the position of the remote user on the remote sports floor to a respective position on the interactive display of the sport floor where the avatar-object representing said remote user is to be displayed.

11. The system of any one of the previous claims 9-10, the interactive display being configured to:
- receiving visualization data via the client application from the LBSN, the visualization data being specific to the first user and/or depending on preferences of the first user specified in the user registry; and
- displaying the visualization data in the form of virtual objects in the interactive display.

12. The system of any one of the previous claims, further comprising a maintenance robot (650), the maintenance robot being configured to:
- receive a maintenance trigger message from the sensors (234), from a maintenance management program coupled to the sensors, or from the LBSN (204), the maintenance trigger message being indicative that no user is currently interacting with the sports floor;
- automatically enter the sports floor and start to perform a maintenance program on the sports floor in response to receiving a maintenance trigger message; and
- automatically terminate the maintenance program and leave the sports floor in response to having completed the maintenance program or in response to receiving a maintenance termination message.

13. The system of claim 12, the maintenance robot comprising a further instance of the client program that is interoperable with the LBSN, the maintenance robot being registered at the LBSN and being assigned to the one of the places in the places registry representing the sports floor.

14. The system of any one of the previous claims, wherein the client application is configured to repeatedly send a list of all identified users currently interacting with the sports floor to the LBSN, thereby enabling the LBSN to notify other users whose accounts are linked to an account of one or more of these currently interacting users of the presence of these currently interacting users.

15. The system of any one of the previous claims, wherein the LBSN is configured to assign user accounts to one or more of the places if the sports floor represented by said place was visited by the user represented by the user account at least once, wherein the client application is configured to repeatedly send a list of all identified users currently interacting with the sports floor to the LBSN, thereby enabling the LBSN to automatically notify any user whose account is associated with the place representing the sports floor (260) in the event that the sports floor is unoccupied or the list of all identified users is empty.

16. The system of any one of the previous claims, the first user having assigned a role of a team game, the LBSN being configured such that one or more second users are notified of the location of the first user only if their role in the team game is compatible with or supplements the role of the first user and the role of other users belonging to the same team and which are already located on the sports floor.

17. A computer-implemented method comprising:
- receiving (902), by each of one or more sensors (234, 602) of a sports floor (260), identification data (230) of a first user (120) interacting with the sports floor;
- receiving (904), by a client application (222), the identification data of a first user from the one or more sensors upon the first user interacting with the sports floor, the client application being interoperable with a location-based social network (LBSN), wherein the LBSN comprises:
∘ a user registry (206) comprising a plurality of user accounts (208) of registered users, wherein some of the user accounts are interlinked, a link between two user accounts representing a trusted relationship between the two interlinked user accounts;
∘ a places registry (206) comprising a plurality of places (252, 254, 256), each place being a digital representation of a physical place at a known location, wherein one of the places represents the sports floor;
- automatically sending (906), by the client application, a first message comprising the identification data and location data of the sports floor to the LBSN to enable the LBSN to notify (908) one or more second users whose accounts are linked to the account of the first user that the first user has interacted with the sports floor.

18. The system according to any one of claims 1-16, further comprising a maintenance robot (650), the maintenance robot being configured to:
- receive a maintenance trigger message from the one or more sensors (234) of the sports floor (260), from a maintenance management program coupled to the sensors, or from the LBSN (204), the maintenance trigger message indicating that no user is currently interacting with the sports floor;
- automatically entering the sports floor and starting to perform a maintenance program on the sports floor in response to the receiving of the maintenance trigger message; and
- automatically terminating the maintenance program and leaving the sports floor in response to having completed the maintenance program or in response to receiving a maintenance termination message.
